# EUROPEAN PATENT APPLICATION

(11) **EP 0 772 317 A2**
(43) Date of publication of application: **07.05.1997**
(21) Application number: 96117466.1
(22) Date of filing: 31.10.1996
(51) Int. Cl.: H04L 1/00

(54) **Adaptive power control and coding for satellite communications**

(30) Priority: 06.11.1995 US 554613
(71) Applicant: HE HOLDINGS, INC. DBA HUGHES ELECTRONICS, Los Angeles, CA 90045-0066 (US)
(72) Inventor: Mead, Donald C., Carlsbad, California 92008 (US)
(74) Representative: Otten, Hajo, Dr.-Ing.

(57) **Abstract**

A method and system (20) is described herein for adaptively adjusting the transmission power and code rate for a transmitted signal to compensate for high bit error rate for the signal at a receiver (22). In particular, the method comprises establishing a threshold bit error rate for the signal received in the receiver (22), calculating the bit error rate of the signal received in the receiver (22), transmitting information indicative of the bit error rate to the transmitter (21), and decreasing the code rate of the signal at the transmitter (21) if the bit error rate is higher than the threshold bit error rate. Prior to adjusting the code rate of the signal, the transmission power of the signal can be increased to attempt to improve the uplink signal strength. The system (20) comprises a transmitter (21) including a coder (31) for transmitting forward-error-corrected bits in a signal, a receiver (22) for receiving the bits, and an independent backlink (30) allowing communication between the receiver (22) and the transmitter (21) relating to fading conditions at the receiver (22).

## Description

### BACKGROUND OF THE INVENTION

The present invention relates generally to digital satellite communication systems, and more particularly to a method and system for adaptively reducing the bit error rate in a digital satellite system.

In modern digital satellite communication systems, a earth-based transmitter beams an uplink signal to an orbiting satellite, and the satellite relays the signal by repeating it as a downlink signal to a receiver antenna. Rain attenuation and other environmental factors, known generally as "fading conditions," can hamper the ability of the downlink signal to reach effectively the receiver antenna. Rain, in particular, can cause disruptive attenuation at the signal on the uplink and the downlink. Fading conditions adversely affect signal quality and cause a corresponding increase in the signal's bit error rate. A threshold bit error rate is often established by the satellite broadcast provider. In general, the transmitted information is not reliable enough to use if its bit error rate exceeds the established threshold.

Fading conditions may be compensated to a limited extent by a power control system in the transmitter. Known uplink power control systems attempt to provide an acceptable level of signal quality by varying the transmitter's power in order to maintain the satellite flux density above the rain attenuation. However, because downlink power is limited by the fixed power capabilities of the satellite, uplink power control primarily affects uplink attenuation, but has little or no effect on the bit error rate and rain-induced degradation of the downlink signal. Thus, known methods of adjusting uplink power do little to make a downlink signal powerful or robust enough to pass through fading conditions such as rain over the receiver antenna.

A standard method of reducing the bit error rate on the downlink is to utilize one or more encoders to introduce error correction or channel coding into the signal before uplink transmission. This method is known as Forward Error Correction, or "FEC". FEC inserts extra bits into the transmitted baseband data stream. The extra data bits are chosen to emphasize the uniqueness of the transmitted information bits and to lower the probability that the data messages communicated by the bits will be corrupted by any attenuation. In conventional coding methods, the FEC bits are redundant to the information bits in the signal. The error probability is reduced as the number of redundant bits is increased. FEC bits, however, are fixed at system construction and cannot be adjusted to conditions in the channels.

Therefore, there is a need for an improved method of utilizing signal power and FEC in order to reduce the bit error rate in a digital satellite communication system when fading conditions are present in the link.

### SUMMARY OF THE INVENTION

The present invention provides a method of controlling signal power and FEC in order to reduce the bit error rate in a digital satellite communications system when fading conditions are present at the system's receiver. The present invention may be embodied in a method of adaptively adjusting a digital communications signal transmitted from a transmitter to a satellite to a receiver. Preferably, the inventive method includes the step of decreasing the code rate of the signal at the transmitter if the bit error rate is greater than a threshold bit error rate.

In another aspect of the invention, information indicative of the bit error rate is sent to the transmitter via a backlink if the calculated bit error rate is greater than the threshold bit error rate.

In yet another aspect of the invention, the inventive method includes the step of increasing the transmission power of the signal at the transmitter if the carrier-to-noise ratio of the received uplink signal measured at a transmitter beacon receiver is below a threshold value.

The present invention may further be embodied in a method that includes the steps of measuring a carrier-to-noise ratio of the signal received in the beacon receiver of the transmitter, changing the transmission power of the transmitter in response to the measured ratio, calculating the bit error rate of the signal received in the receiver, transmitting a control signal that is indicative of the bit error rate to the transmitter via a backlink, and changing the code rate of the signal at the transmitter in response to the control signal.

The present invention may be further embodied in a system for transmitting a signal from a transmitter to a satellite to a receiver, wherein a coder is provided in the transmitter for injecting error correction bits into the information signal transmitted to the satellite, and a backlink communication link is provided between the receiver and the transmitter. Preferably, the backlink communication takes place outside the frequency band of the information signal, and is used for sending information from the receiver to the transmitter relating to fading conditions at the receiver. The backlink can also provide a path for sending commands to the receiver instructing it to take signal quality measurements.

Thus, the present invention provides improved performance of a satellite communications link experiencing attenuation at the receiver. The present invention may be used to supplement existing uplink power control algorithms by communicating bit error rate information from the receiver to the transmitter via the backlink, and using this information to adaptively and selectively alter the code rate in order to improve the bit error rate at the receiver.

It is to be understood that both the foregoing general description and the following detailed description are exemplary and explanatory and are intended to provide further explanation of the invention as claimed. The invention, together with further objects and attendant advantages, will best be understood by reference to the following detailed description, taken in conjunction with the accompanying drawings.

### BRIEF DESCRIPTION OF THE DRAWINGS

Figure 1 is a block diagram showing a satellite communication system incorporating the method and apparatus of the present invention.

Figure 2 is a flow diagram showing a preferred embodiment of the method of the present invention.

Figure 3 is a block diagram showing an uplink power control system capable of being used in the satellite communication system of Figure 1.

Figure 4 is a block diagram of a forward error correction coding system capable of being used in the satellite communication system of Figure 1.

### DETAILED DESCRIPTION OF THE PREFERRED EMBODIMENTS

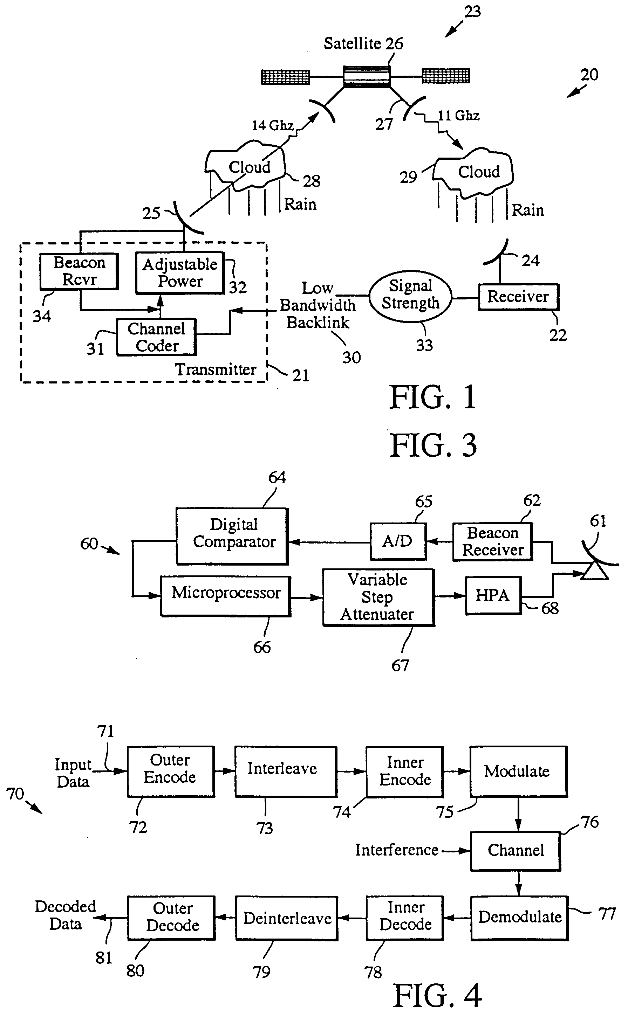

Referring now to the drawings, Figure 1 illustrates a digital satellite communication system 20 that incorporates the present invention. The system 20 preferably includes a ground-based transmitter 21, a receiver 22, and a space segment 23 comprising an orbiting satellite 26. In an exemplary application, the receiver is positioned on a sea-bound ship within a group of ships.

In a typical satellite broadcast application, the transmitter 21 receives a digitally modulated signal and beams it at 17.3-17.8 Ghz to satellite 26. The satellite 26 translates the signal to 12.2-12.7 Ghz then beams it to the receiver 22 for subsequent demodulation and decoding. The satellite 26 transmits downlink signals via on board transponders 27 operating at a known power level.

The transmitter 21 preferably includes a conventional adjustable power subsystem 32 which can be utilized to increase power in response to uplink attenuation conditions. In order to prevent the transmitter 21 from exceeding the power flux density at the satellite 26 when such a system is in use, the uplink attenuation level is calculated by the system. The attenuation level is typically calculated using the downlink attenuation of the satellite beacon signal received in a beacon receiver 34 when the signal is available for measurement.

Transmitter 21 also typically includes at least one channel coder 31 connected to the subsystem 32 for introducing FEC into the signal before transmission through antenna 25. As described below, the power subsystem of the preferred embodiment of the invention will preferably be able to adjust the transmitted FEC based on the conditions at the receiver instead of only the uplink parameters described above.

The receiver 22 is connected to antenna 24 for receiving a downlinked signal from the orbiting satellite 26. The receiver 22 and the transmitter 21 are linked together by a low-bandwidth backlink 30 which communicates information or commands relating to received signal characteristics such as carrier-to-noise ratio ("CNR") or the bit error rate. The backlink 30 is independent from the satellite channel which transmits the modulated, coded information bits, and preferably comprises a 9600 baud low-band dedicated radio channel. In the alternative, the independent, out-of-band backlink 30 may comprise a common terrestrial-based telephone link, a robust radio channel, or even a separate satellite communication channel.

As an example of an attenuation situation, rain and clouds 28 may attenuate the signal on the uplink side. Similarly, on the downlink side at frequencies above 10 Ghz, rain and clouds 29 may attenuate and degrade the signal so that it cannot be effectively utilized within the receiver 22. Such rain fade attenuation often causes an increased bit error rate at the receiver 22.

Generally, the system 20 adjusts transmission parameters at the transmitter 21 to compensate for fading conditions on both the uplink and the downlink. A beacon signal is transmitted from the satellite 26 back to the transmitter 21, which receives the beacon signal via the beacon receiver 34. If fading conditions such as rain or clouds 28 attenuate the uplink signal, the beacon receiver 34 causes the power subsystem 32 to increase the transmission power of the uplink signal to satellite 26. The measurements performed by the beacon receiver 34 and adjustments made by the subsystem 32 are repeated until the carrier-to-noise ratio measured in the beacon receiver 34 no longer improves. Receiver 22 then measures the bit error rate, and determines whether the bit error rate exceeds an established threshold. The receiver 22 then notifies the transmitter 21 via the low-bandwidth backlink 30 to decrease the code rate of the transmitted signal in coder 31. The receiver 22 continues to measure the bit error rate of the received signal until the bit error rate falls below the established threshold. The receiver 22 then notifies the transmitter 21 via the backlink 30 to cease decreasing the code rate in the channel coder 31.

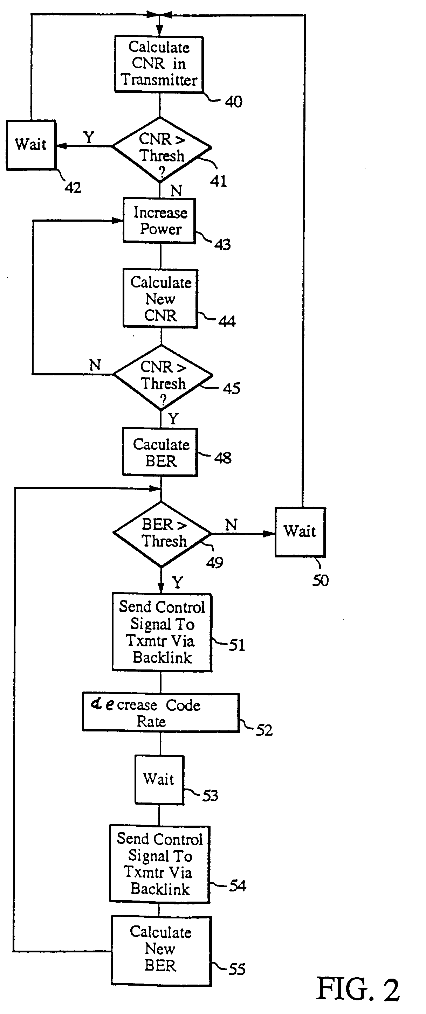

Figure 2 illustrates a method of compensating for an increase in bit error rate due to downlink attenuation according to the present invention. The illustrated method is preferably implemented by the system 20 shown in Figure 1. At periodic intervals during the operation of the satellite system, for example every ten minutes, threshold values for an acceptable CNR representing a usable signal in the receiver 22 should be established. In similar fashion, threshold values should also be established for the bit error rate representing a usable signal. These values will be used to initiate adjustments in the code rate at the transmitter 21.

As shown in Figure 2, the transmitter 21 preferably calculates the CNR of the uplink signal using the beacon receiver 34 and conventional techniques at block 40. If the calculated CNR is greater than the threshold CNR previously established (block 41), the transmitter 21 waits a set time interval at block 42 and recalculates the CNR. However, if the calculated CNR is less than or equal to the threshold, the transmitter 21 increases the transmit power by a set increment at block 43.

Next, the transmitter 21 calculates a new CNR at block 44. If the new CNR is still lower than the threshold value (block 45), the adjustment process proceeds again. If the new CNR is above the threshold at block 45, the system proceeds to coding adjustment steps to attempt to improve the bit error rate of the signal. Alternatively, the transmitter 21 waits a set period of time before calculating a new CNR. The transmitter 21 then compares the new CNR with the previously measured CNR. If the new CNR is improved over the previous CNR, the transmitter 21 to block 41 resets and again compares the new CNR with the threshold value.

The coding adjustment steps proceed as follows. The bit error rate of the received signal is first calculated at block 48. The bit error rate is then compared at block 49 with a previously established threshold value. If the bit error rate is not greater than the threshold, the system waits for a set period of time at block 50 before proceeding back to block 40 to begin the process again. If the bit error rate is greater than the threshold, a control signal is sent back to the transmitter 21 via the backlink 30 (block 51). The transmitter 21 decreases the code rate (either in the convolutional code or the Reed-Solomon code) at block 52 to provide a more redundant and error-corrected transmitted signal. In the alternative, the actual bit error rate may be sent to the transmitter 21, where calculations for the code rate adjustments may be performed.

The following table shows the adjustment increments that may be made to the transmitted signal, although the incremental values are not required to be integers. With rain fade, both communication performance and implementation simplicity are achieved by keeping the total bit rate fixed while decreasing the code rate. This is particularly simple to do if the convolutional code is the one that is lowered. The code should be lowered by 1/2 k where k is the constraint length.

| Convolutional Code | Information Bit Rate |
|---|---|
| 7/8 | 30.625 Mbps |
| 1/2 | 17.500 |
| 1/4 | 8.750 |
| 1/8 | 4.375 |
| 1/16 | 2.1875 |

After the code rate is decreased, the system waits a predetermined amount of time at block 53. A control signal is sent at block 54 back to the transmitter 21 via backlink 30. The receiver then calculates a new bit error rate at block 55 and returns again to block 49 to determine whether the new bit error rate is not greater than the threshold. If it is greater than the threshold, the receiver 22 proceeds to block 51 to perform more adjustments. If the new bit error rate is satisfactory when compared with the threshold at block 49, the system times out at block 50 and returns to block 40 to start the process again.

Figure 3 is a schematic block diagram of a typical uplink power control system 60 which may be used to adjust power parameters in the preferred embodiment of the invention. Referring to Figure 3 in combination with the previous figures, uplink power control system 60 includes a beacon receiver 62, a comparator 64, an analog/digital converter 65, at least one microprocessor 66, and a variable step attenuator 67 which interfaces with the transmitter's High Power Amplifier (HPA) 68. The system operates by receiving the satellite beacon signal in the beacon receiver 62, converting the signal to a digital format in converter 65, and comparing the measurement with a reference value in the comparator 64. In the system illustrated, the measurements are taken every 200 ms. If the 30 measurements differ by 1 db or more, the microprocessor 66 calculates an uplink attenuation value from the measured attenuation, taking into account data from rain models or measured values. Adjustment parameters are then calculated or read from stored tables to determine the adjustment desired to the HPA 68. The parameters are fed to attenuator 67 which in turn adjusts HPA 68 to provide a stronger or weaker transmitter signal output. In the alternative, CNR values may be calculated and used instead of the signal level values.

As described previously, satellite systems can employ FEC or "channel coding" to correct transmission errors. In digital satellite communication system 20, a concatenated code is typically utilized at the transmitter 21 to achieve error detection and correction at the receiver 22. The system 70 of Figure 4 may therefore be used in the preferred embodiment of the present invention.

Figure 4 shows an exemplary concatenated coding system 70 used in transmitter 21 and receiver 22. On the transmission side, audio, video or other data bits are input at 71 to a first encoder for the first encoding step 72 (outer encoding). In a typical satellite system, the outer encoding step 72 preferably comprises conventional Reed-Solomon coding on the data bits at a code rate of 130/146 in the absence of rain fade. The encoded bits are then interleaved at block 73 to widen the coding over a uniform time base. The interleaving is typically performed using dynamic random access memories (DRAM's) to separate the encoded bits. The interleaved bits are then encoded a second time at block 74 (inner encoding). Preferably, this step utilizes conventional convolutional codes. Under the high coding rate and the preferred transmission rates noted above, the information rate in the system is 30.3 Mbps.

The twice-encoded data bits are modulated at block 75 using techniques well-known in the art. Preferably, the satellite system modulates the data in a QPSK format using 2 bits per symbol. The modulated signal is then beamed over the desired channel at block 76. Most interference that would corrupt the transmitted signal would be introduced at this point.

On the receive side, the received modulated signal is demodulated at block 77 using conventional demodulation techniques. The convolutional encoded bits are Viterbi decoded at block 78, followed by deinterleaving to isolate the coded bits at block 79. Finally, the Reed-Solomon outer-encoded bits are decoded at block 80, resulting in decoded data 81.

The power control system 60 and coding system 70 examples described can be utilized in the preferred embodiment of the adaptive satellite communication system 20 to compensate for fading conditions on the downlink side. In particular, power control system 60 may be utilized as subsystem 32 in the system 20 of Figure 1, and coding system 70 may be utilized as subsystem 31 in Figure 1.

The method described herein should preferably be performed at periodic intervals in order to verify the condition of the downlink signal. Because the information concerning the downlink conditions is transmitted on the independent downlink, the intervals between measurement procedures can vary, and need not be dependent on the particular bit components of the transmitted signal.

As an alternative to the method described herein, the measured bit error rate at the receiver may be substituted for the measured CNR as a signal quality measurement during the power control adjustment steps 40-45. In addition, various other signal quality measurements may be taken and sent back to the transmitter via the backlink.

The method described herein is preferably utilized to deliver improved satellite signals to sea-bound naval ships. For example, the backlink may be implemented on one of the ships in a particular battle group. This ship could then communicate information regarding the fading conditions over the entire battle group back to the transmitter via the backlink. In this fashion, the satellite receivers on each of the ships in the battle group can experience improved bit error rate upon subsequent adjustments at the transmitter.

Of course, it should be understood that a wide range of changes and modifications can be made to the preferred embodiment described above. For example, the information transmitted by the backlink may be control signals, measurement data relating to the bit error rate, or coding adjustment values or commands for the transmitter. Furthermore, while the description above is made in terms of a fixed satellite link, the method and system could be applied to any digital communication link. This includes, but is not limited to, terrestrial broadcast systems, terrestrial point-to-point systems, and broadcast-to-mobile systems. Thus, it is intended that the foregoing detailed description be regarded as illustrative rather than limiting and that it be understood that it is the following claims, including all equivalents, which are intended to define the scope of this invention.

## Claims

1. A method for adjusting a signal having a code rate and being transmitted by a transmitter (21) and received in a receiver (22), comprising the steps of:
establishing a threshold bit error rate for the signal received in the receiver (22);
calculating (48) or determining the bit error rate of the signal received in the receiver (22);
transmitting (51) information indicative of the bit error rate to the transmitter (21); and
decreasing (52) the code rate of the signal at the transmitter (21), if the calculated bit error rate is higher than the threshold bit error rate.

2. The method of claim 1, characterized by the further steps of:
repeating said steps of calculating (48, 55) the bit error rate of the signal, transmitting (51) the bit error rate to the transmitter (21), and decreasing (52) the signal code rate until the calculated bit error rate of the signal received in the receiver (22) equals the threshold bit error rate.

3. The method of claim 1 or claim 2, characterized in that said step of transmitting (51) the calculated bit error rate to the transmitter (21) is accomplished via a low-bandwidth backlink (30).

4. The method of any of claims 1 - 3, characterized by the steps:
determining (49) whether the bit error rate of the signal received in the receiver (22) is greater than the threshold bit error rate;
transmitting (51) a control command to the transmitter (21) via a backlink (30) if the bit error rate of the signal received in the receiver (22) is greater than the threshold bit error rate; and
decreasing the code rate of the signal at the transmitter (21) in response to the control command.

5. The method of claim 3 or 4, characterized in that the backlink (30) further comprises a communication line on a bandwidth separate from the signal.

6. The method of any of claims 1 - 5, characterized in that prior to adjusting the code rate of the signal the transmission power of the signal is adjusted, preferably by the steps of:
measuring (40) a carrier-to-noise ratio of the signal received in a beacon receiver (34) of said transmitter (21); and
increasing (43) the transmission power of the transmitter (21), if the carrier-to-noise ratio is below a threshold value.

7. The method of claim 6, characterized by the steps of:
measuring (44) an adjusted carrier-to-noise ratio of the signal received in the beacon receiver (34) of said transmitter (21) after said step of increasing (43) the transmission power of the transmitter (21); and
repeating said steps of increasing (43) the transmission power of the transmitter (21) and measuring (44) the adjusted carrier-to-noise ratio until the adjusted carrier-to-noise ratio fails to improve over the previous carrier-to-noise ratio.

8. A system for transmitting a signal, comprising:
a transmitter (21) for transmitting bits in a signal, said transmitter (21) including a coder (31) for applying forward error correction to the bits in the signal;
a receiver (22) for receiving the bits; and
a backlink (30) allowing communication between the receiver (22) and the transmitter (21), said backlink (30) preferably out of the band of said signal.

9. The system of claim 8, characterized in that said communication contains information relating to fading conditions in the receiver (22) and further comprises the bit error rate of the bits received in the receiver (22).

10. The system of claim 9, characterized in that said coder (31) applies forward error correction at a code rate, said code rate being adjustable by the coder (31) based on the bit error rate received in the transmitter (21) from the receiver (22).

11. A method for adjusting a signal transmitted by a transmitter (21) and received in a receiver (22) and said transmitter (21), said transmitter (21) having a beacon receiver (34), an adjustable transmission power subsystem (32), and a coder (31), comprising the steps of:
measuring (40) a carrier-to-noise ratio of the signal received in the beacon receiver (34) of said transmitter (21);
increasing (43) the transmission power of the transmitter (21);
calculating (48) the bit error rate of the signal received in the receiver (22);
transmitting (51) to the transmitter (21) via a backlink (30) a control signal indicative of the bit error rate; and
decreasing (52) the code rate of the signal at the transmitter (21).

12. The method of claim 11, characterized by the steps of:
measuring (44) an adjusted carrier-to-noise ratio of the signal received in the beacon receiver (34) of said transmitter (21) after said step of increasing (43) the transmission power of the transmitter (21); and
repeating said steps of increasing (43) the transmission power of the transmitter (21) and measuring (44) the adjusted carrier-to-noise ratio until the adjusted carrier-to-noise ratio fails to improve over the previous carrier-to-noise ratio.
